# EUROPEAN PATENT SPECIFICATION

(11) **EP 1 755 876 B1**
(45) Date of publication and mention of the grant of the patent: **23.12.2009**
(21) Application number: 05741827.9
(22) Date of filing: 23.05.2005
(51) Int. Cl.: B30B 9/22

(54) **FILTER PRESS FOR FORMING CERAMIC SLABS, AND ITS FORMING METHOD**
FILTERPRESSE ZUR HERSTELLUNG VON KERAMIKPLATTEN UND IHR HERSTELLUNGSVERFAHREN
FILTRE PRESSE POUR FORMAGE DE BRAMES DE CERAMIQUE ET PROCEDE CORRESPONDANT

(30) Priority: 11.06.2004 IT RE20040070
(43) Date of publication of application: 28.02.2007
(73) Proprietor: DIEMME S.P.A., 48022 Lugo (IT)
(72) Inventor: MELANDRI, Massimo, I-48022 Lugo (IT)
(74) Representative: Corradini, Corrado
(86) International application number: PCT/EP2005/005650
(87) International publication number: WO 2005/120817

(56) References cited:
- EP-A- 0 830 936
- WO-A-98/33573
- DE-A1- 4 223 022
- GB-A- 1 131 580
- US-A- 3 698 557
- US-A- 5 862 612

## Description

### TECHNICAL FIELD

The present invention relates to a filter press for forming ceramic slabs in accordance with the introduction to claim 1, and to a method for forming said slabs therewith.

More particularly, the present invention relates to a filter press of the plate type for filtering ceramic slip (mixture of water and inert material) for the purpose of providing panels for producing large-dimension slabs of porcelain sandstone.

### PRIOR ART

The use of large-dimension ceramic articles is becoming increasingly more frequent in cladding ventilated walls of large buildings, in kitchen worktops as a replacement for resin-coated compressed chipboard, and in general wherever they can replace natural stone, marble, granite etc.

In manufacturing ceramic slabs, their maximum dimensions are known to be of the order of 1.2m x 0.8m, these being achieved by the production method known as dry moulding, very similar to that used for producing tiles.

This method implies numerous disadvantages and drawbacks both because of the high investment costs of large-dimension presses, and because of the high production costs, in particularly energy costs. Alternatively, in manufacturing sanitary appliances a wet production process known as the casting process can be applied, using a mould constructed of microporous plaster or resin.

The use of this process for slab production has not yet given notable results.

The document WO 98/33573 discloses a modular filter apparatus comprising stacked filter plates. Slurry to be filtered flows into the apparatus and the flow of slurry then branches off to each of the filter plates. The plates are coupled to a hydraulic jack mechanism and an upper strongback.

Between two adjacent mating plates a filtration chamber for receiving the material to be filtered is defined.

A rotatable filter cloth is provided at each module to enable the filtered material to be discharged from the filtration chamber when the plates are spaced apart.

There is therefore a strongly felt requirement for a plant enabling large-dimension and large thickness ceramic slabs to be formed which operates continuously and has a production cycle requiring relatively little energy.

### DISCLOSURE OF THE INVENTION

The object of the present invention is to provide a slab forming plant having structural and operational characteristics such as to satisfy said requirements while at the same time obviating the stated drawbacks of the known art.

This object is attained by plant comprising, according to the invention, a filter press in which at least two plates are horizontal and movable vertically between a first clamped configuration in which they are clamped together to define at least one filtration chamber for receiving material to be filtered, and a second open configuration in which they are spaced apart to enable said material to be discharged in the form of a filtered panel, at least one of said two plates being provide with at least one discharge channel for the filtrate, each plate being wrapped by a filter cloth rotatable in order to transfer said filtered panel without breakage towards further conveying means.

The dependent claims define particularly advantageous preferred embodiments of the ceramic slab filter press of the invention.

Another object is to provide a method for forming said slabs with a plant in accordance with claim 20.

### BRIEF DESCRIPTION OF THE DRAWINGS

The characteristics and advantages of the invention will be apparent on reading the ensuing description provided by way of non-limiting example, with the aid of the figures shown in the accompanying drawings, in which:
Figure 1 is a schematic sectional side view of a filter press in a first clamped configuration, in accordance with the present invention;
Figure 2 shows the filter press of Figure 1 in a second open configuration;

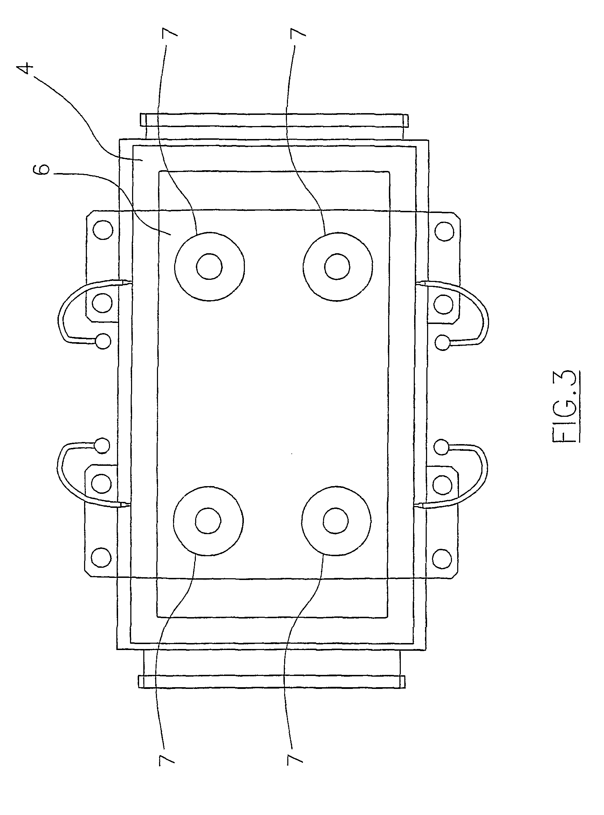

Figure 3 is a view of the filter press of Figure 1 from above;
Figure 4 shows a detail of Figure 1;
Figure 5 shows a detail of Figure 2;
Figure 6 is an exploded view of a plate of the filter press of Figure 1;
Figures 7 and 8 are two alternatives of a detail of the plate of the filter press of Figure 1;

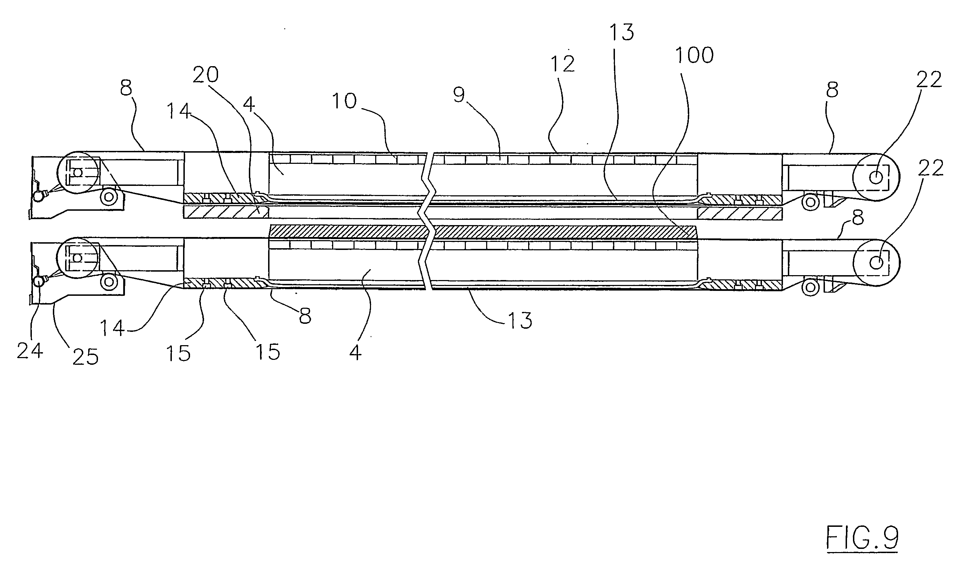

Figure 9 is a schematic view of two plates for the filter press of the present invention.

### BEST MODE FOR CARRYING OUT THE INVENTION

With reference to said figures, the reference numeral 1 indicates overall a filter press for forming ceramic slabs in accordance with the present invention.

Said filter press is supported by support means which in the example are in the form of four support feet 2.

Directly associated with said support feet 2 there is a horizontal fixed head on which a plurality of vertically movable plates 4 are stacked, and which will be described in detail hereinafter.

Said plates 4 are guided by suitable guide means, which in the example are vertically disposed bars 5 surmounted by a crosspiece 5a.

A movable head 6 is positioned above the plates 4.

Said movable head 6 is driven by suitable drive means, for example a group of four hydraulic cylinder-piston thrust units 7.

Alternatively, the movable head 6 can be positioned below the plates 4 and the fixed head 3 be positioned above, or a pair of heads movable towards and away from each other can be provided.

In the subsequent description explicit reference will be made to a filter press 1 comprising a plurality of movable horizontal plates 4, however in general terms the filter press comprises at least one pair of plates 4.

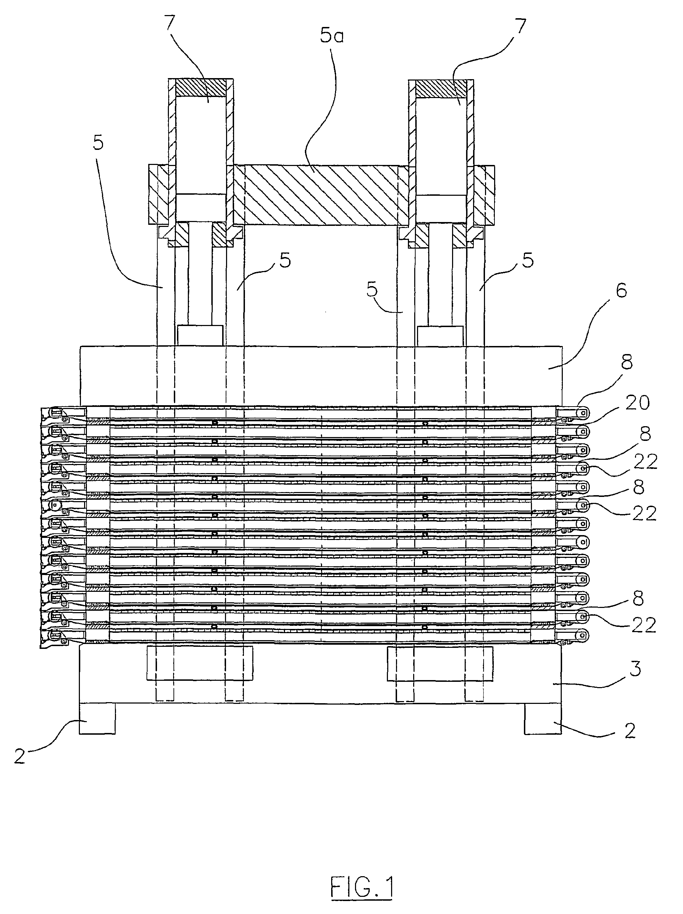

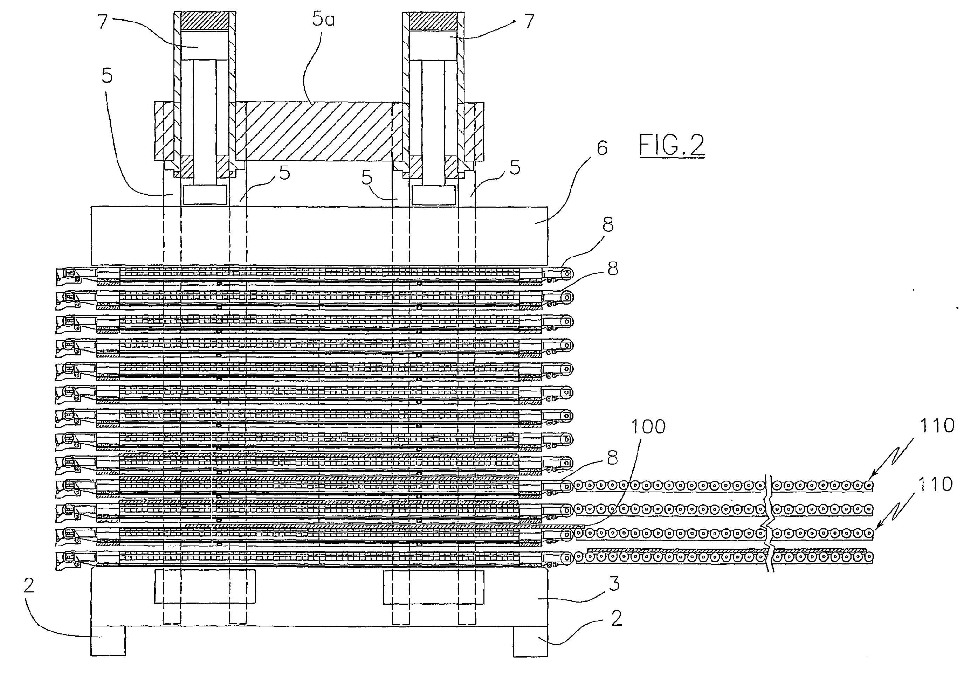

Said plates 4 are movable in a vertical direction between a first clamped configuration in which they are clamped together (Figure 1) to define at least one filtration chamber to receive the material to be filtered, and a second open configuration in which they are spaced apart (Figure 2) to enable said material to be discharged in the form of a filtered panel 100. The material to be filtered is a material which must finally be compact and coherent, to be used as a slab, without crumbling.

Said material is preferably ceramic slip, to which explicit reference will be made in the subsequent description.

The plates 4 of the filter press of the present invention are identical, with dimensions chosen on the basis of the desired panel 100.

In the example, each plate measures about 2.2m x 4m and is constructed of stainless steel.

According to the present invention, each plate 4 is wrapped with a filter cloth 8 which it rotatable in order to transfer the filter panel 100 without breakage towards further conveying means, such as roller tables 110.

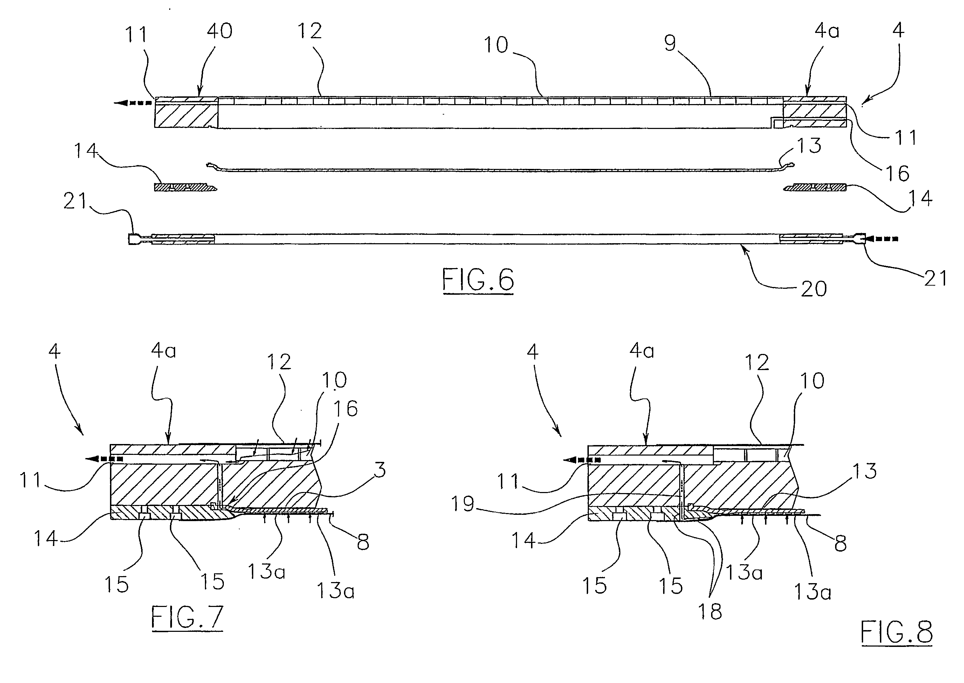

As can be seen in Figure 6, in the upper face of the plate 4 there is provided a filtration seat 9, of about 20mm - 30mm in depth, bounded by a perimetral frame 4a, to form a compartment acting as a filtrate chamber of about 1.8m x 3.5m, which houses an electrowelded grid 10 formed from vertical strips of stainless steel.

The grid 10 rests on a continuous surface, corresponding to the base of the seat 9, of solid or alternatively box-like sheet metal.

The filtrate collects in the seat 9 and by way of at least one filtrate discharge channel 11, of which in the example four are provided disposed at the vertices of the four corners, is conveyed to the outside, preferably into a sealed tank, not shown, maintained under slight vacuum to facilitate extraction of the filtered liquid.

Above said grid there is housed a lattice element 12 of plastic material, preferably polypropylene, with sufficiently dense apertures to support the filter cloth 8 without this deforming excessively under the action of the increasing pressure of the panel 100 being formed.

In the example, said lattice element 12 presents a thickness of about 3mm-5mm and is provided with holes arranged in honeycomb manner.

An impermeable membrane 13 is associated with the lower face of the plate 4.

The membrane, with useful dimensions of 1.8m x 3.5m, is maintained in position by a backing frame 14 fixed by screws 15 to the plate 4, to provide a tight seal towards the outside.

The region between the membrane 13 and the lower face of the plate 4 with which it is associated is reachable by a pressurized fluid via channels 16 communicating with that region.

The pressurized fluid can be air, water or oil.

According to a preferred embodiment of the present invention, the elastic membrane 13 has that surface in contact with the filter cloth 8 suitably profiled (Figures 7, 8) to form channels.

Essentially, that surface in contact with the filter cloth 8 is covered with a plurality of protuberances 13a, providing a further draining surface.

In a first embodiment shown in Figure 7, a number of connection grooves are provided in the edge of the membrane 13 to enable the filtrate to leave through holes 16 passing through the membrane, which communicate with corresponding channels 17 in the plate 4 which mate with the filtrate discharge channels 11.

The holes 16 passing through the membrane 13 are provided in its perimeter and do not communicate with the region into which the pressurized fluid is fed.

In a second preferred embodiment, shown in Figure 8, the backing frame 14 which fixes the membrane 13 to the plate 4 is provided with channels 18 which convey the fluid present on the membrane 13 into a channel 19 provided in the plate 4 and communicating with the filtrate discharge channel 11.

In this second embodiment the seal provided by the membrane 13 is more certain.

According to the present invention, between two consecutive plates 4 there is interposed a frame 20 having the same thickness, for example between 25mm and 50mm, and the same inner empty surface area as those required for the filtered panel 100.

Essentially, the frame 20 defines a volume corresponding substantially to the filtration chamber within which the panel 100 is formed.

The frame 20 is provided with at least one first entry hole 21, four being provided in the example disposed in pairs along its long side, through which the slip to be filtered is injected by an external pumping system, not shown.

If veining or variegation effects are to be created in the material being filtered, in order to subsequently obtain a final product of pleasant appearance imitating natural stone, the frame 20 can be further provided with at least one second entry hole, not shown, for injecting a mixture of colorant material.

Preferably, the mixture of colorant material presents a density greater than the density of the injected slip in order to prevent complete mixing between the two and to obtain well defined veining.

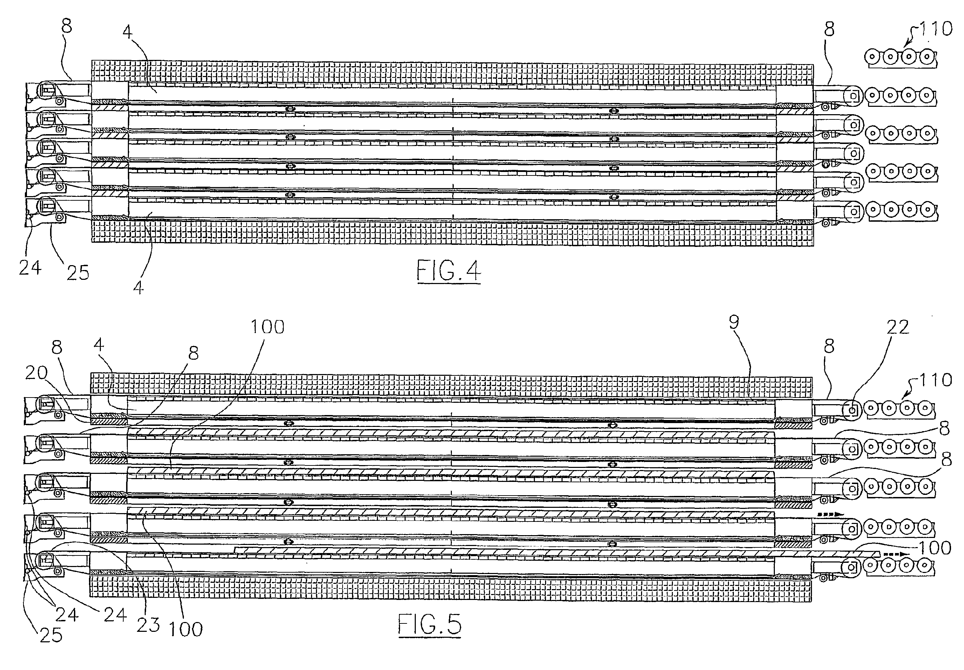

In operation, the filter press 1 is positioned in the first tightly clamped position by operating the movable head 6, as shown in Figures 1 and 4. The force exerted by the movable head 6 which vertically compresses the highest plate 4 is equal to that exerted within the compartment between the membrane 13 and the underlying plate 4, independently of their number.

The substantially liquid slip, of density between 1.2 and 1.6 kg/l in the example, is injected into the interior of the frame 20, and tends to freely release water through the underlying filter cloth 8.

Then when gravity is no longer sufficient to extract water from the slip, the pumping system, not shown, is operated to inject the slip at a pressure of about 6-10 bar.

When the action of the pumping system becomes insufficient because the space within the frame 20 interposed between two filter cloths 8 is filled with solid substance, the action of the pumping system is halted.

The panel 100 under formation still contains a certain quantity of water, generally between 25 and 30%.

To complete the formation of the filtered panel 100, compressed air or other fluid at a pressure of about 15-25 bar or more is fed onto the elastic membrane 13.

The elastic membrane 13 transfers the pressure exerted on it directly onto the panel 100 until it reaches a percentage of dry substance between 80 and 85%.

On termination of filtration, the residual pressure exerted on the membrane 13 is discharged and the plates 4 are moved into their second open configuration (Figures 2, 5) by a mechanical or hydraulic system, not described as it is of type known to the expert of the art.

To prevent the membrane 13, because of possible slackening, from sliding against the underlying moving panel 100 to cause possible undesirable deformation, lining or stretching, the pressurized region above the membrane 13 is connected to a suitable tank maintained at less than atmospheric pressure, in order to maintain the membrane 13 adhering to the surface of the upper plate during the subsequent step of removal of the panel 100.

The frame 20 is also drawn upwards by the respective overlying plate 4, leaving the just formed filtered panel 100 on the underlying movable filter cloth 8.

The panel 100, without the surrounding frame 20 because it has been raised, lies on the cloth 8 by its own weight, to facilitate which the walls of the frame 20 can be given a slight upwardly converging inclination.

The distance travelled by the plate 4 when being lifted must be sufficient to enable the filtered panel 100 to then be extracted, this in the example being at least 35-40 mm.

A series of motorised roller tables or conveyor belts can be provided to the side of each mould to receive the panels 100 dragged by the respective filter cloths 8.

Essentially, when the filter press has been completely opened, the panels 100 are fed to the respective roller tables 110 by an electrical or hydraulic system.

If a single roller table 110 is to be used, the panels 100 must be extracted one at a time, and means be provided to move the roller table vertically. The filter cloths 8 are operated by a traction drive roller 22 positioned at one end of the endless filter cloth 8, said drive roller 22 dragging the filter cloth 8 which passes endlessly about said traction roller 22 and an idle return roller 23 positioned at the other end.

While removing the panel 100 from the plate 4, the filtration power of the cloth 8 can be regenerated by wash means.

In the example, a bar with nozzles 24 located in the region containing the return roller 23 regenerates the filter cloth 8 by means of jets of pressurized water (at about 20-50 bar).

The wash water can be suitably collected in collection vessels 25 located below each return roller 23.

This wash operation can be effected on termination of each cycle either on all the filter cloths 8 or on one or more cloths 8 per cycle, depending on the degree of clogging of the cloths.

When the panels 100 have been extracted, the filter press 1 is ready to commence a new filtration cycle.

As will be apparent from the aforegoing, the filter press for forming ceramic slabs according to the present invention satisfies those requirements and overcomes those drawbacks stated in the introduction to the present description with reference to the known art.

In this respect, the filter press of the present invention enables panels to be formed which can be used as such, without requiring high electrical power and without excessive wastage of energy.

In addition, said filter press provides large-dimension slabs which, because of the particular arrangement of the filter cloths, can be extracted from the press without suffering any breakage.

Also important is the facility for obtaining large-dimension slabs similar to natural stone, marble etc. by feeding colorant material into the frame interposed between the cloths.

Numerous modifications and variants can be made to the aforedescribed filter press for forming ceramic slabs in order to satisfy contingent specific requirements, all however contained within the scope of protection of the invention, as defined by the following claims.

## Claims

1. A filter press (1) comprising at least two horizontal plates (4) movable vertically between a first clamped configuration in which they are clamped together to define at least one filtration chamber for receiving material to be filtered, and a second open configuration in which they are spaced apart to enable said material to be discharged in the form of a filtered panel (100), at least one of said two plates (4) being provided with at least one discharge channel for the filtrate, wherein in one face of the plate (4) there is provided a filtration seat (9) bounded by a perimetral frame (4a), to form a compartment acting as a filtrate chamber, each plate (4) comprising a filter cloth (8) rotatable in order to transfer said filtered panel (100) towards further conveying means (110),
**characterised in that**
the other face of the plate (4) is covered by an impermeable elastic membrane (13), the region between the membrane (13) and the face of the plate (4) being in communication with a pressurized fluid so as air, water or oil, and **in that** each plate (4) is wrapped by said filter cloth (8).

2. A filter press (1) as claimed in claim 1, wherein a frame (20) having the same thickness and the same inner empty surface area as those required for the filtered panel (100) is interposed between said at least two plates (4).

3. A filter press (1) as claimed in claim 2; wherein said frame (20) is provided with at least one first entry hole (21) for injecting said material to be filtered in the form of slip.

4. A filter press (1) as claimed in claim 2, wherein said frame (20) is provided with at least one second entry hole for injecting colorant material.

5. A filter press (1) as claimed in claim 1, wherein said membrane (13) is maintained in position by a backing frame (14) fixed perimetrally to the plate (4).

6. A filter press (1) as claimed in claim 5, wherein said backing frame (14) is provided with channels (18) communicating with said at least one discharge channel (11).

7. A filter press (1) as claimed in claim 1, wherein that surface of said elastic membrane (13) opposite that of the plate (4) with which it is associated is profiled to form channels.

8. A filter press (1) as claimed in claim 1, wherein the filtration seat (9) is bounded by a perimetral frame (4a) in which a grid (10) is housed.

9. A filter press (1) as claimed in claim 8, wherein a lattice element (12) is positioned over said grid (10).

10. A filter press (1) as claimed in claim 1, wherein the filtration seat (9) communicates through a discharge channel (11) with a sealed tank maintained under vacuum.

11. A filter press (1) as claimed in claim 1, and 10 wherein each plate (4) is wrapped by a filter cloth (8) rotatable in order to transfer said filtered panel (100) towards further conveying means (110), said rotatable cloth resting respectively on the elastic membrane (13) at one face of the plate (4), and on the lattice (12) on the other face of the plate.

12. A filter press (1) as claimed in claim 1, comprising at least one movable head (6) to vertically compress said plates (4).

13. A filter press (1) as claimed in claim 1, comprising wash means (24) for restoring the permeability characteristics of the filter cloth (8) on termination of each slab forming cycle.

14. A filter press (1) as claimed in claim 1, wherein said filter cloths (8) are operated by a drive roller (22) positioned at one end of each plate (4) and an idle roller (23) positioned at the opposite end.

15. A filter press (1) as claimed in claim 1, comprising a plurality of said plates (4).

16. A filter press (1) as claimed in claim 1, wherein said material to be filtered is ceramic slip.

17. A slab forming method comprising the following steps:
a) providing a filter press according to one of the claims 1 to 16
b) injecting under pressure the material to be filtered into said filtration chamber via at least one first entry hole (21);
c) creating a pressure within said filtration chamber by deformation of the impermeable elastic membrane (13) thereof.
d) withdrawing said pressure;
e) drawing said two plates (4) apart and rotating said cloth (8) to remove the filtered material in the form of a slab.

18. A method as claimed in claim 17 further comprising a step on injecting under pressure into said filtration chamber a mixture of colorant material

19. A method as claimed in claim 17, wherein the injection of the material to be filtered is conducted at a pressure of 25 bar.

20. A method as claimed in claim 17, wherein said pressure created by the deformation of the membrane is comprised between 15 and 25 bar.

21. A method as claimed in claim 17, wherein said material to be filtered is a suspension of ceramic slip and its derivatives.

## Patentansprüche

1. Eine Filterpresse (1) mit wenigstens zwei horizontalen Filterplatten (4), die sich vertikal zwischen einer ersten gespannten Anordnung, in der sie aneinandergeklemmt sind, um wenigstens eine das zu filternde Material aufnehmende Filterkammer zu bilden, und einer zweiten offenen Anordnung bewegen lassen, in der sie voneinander getrennt sind und das Material in Form einer gefilterten Platte (100) entladen werden kann, wobei wenigstens eine der beiden Filterplatten (4) mit wenigstens einem Entladungskanal für das Filtrat ausgestattet ist, und dabei auf einer Seite der Filterplatte (4) ein in ein Rahmensystem (4a) eingebundener Filtersitz (9) zur Verfügung steht, der ein als Filterkammer dienendes Fach bildet. Jede Filterplatte (4) beinhaltet daneben ein drehbares Filtertuch (8), mit dem die gefilterte Platte (100) auf nachgeschaltete Fördermittel (110) übertragen wird.
**Dadurch gekennzeichnet, dass**
die andere Fläche der Filterplatte (4) mit einer undurchlässigen elastischen Membran (13) bedeckt ist, wobei der Bereich zwischen der Membran (13) und der Fläche der Filterplatte (4) durch ein unter Druck gesetztes Fluid wie Luft, Wasser oder Öl in Verbindung steht, und jede Filterplatte (4) mit dem Filtertuch (8) ausgekleidet ist.

2. Eine Filterpresse (1) nach Patentanspruch 1, bei der ein Rahmen (20) in der Dicke und mit der gleichen leeren Innenfläche wie für die gefilterte Platte (100) benötigt zwischen den wenigstens zwei Filterplatten (4) liegt.

3. Eine Filterpresse (1) nach Patentanspruch 2, bei welcher der Rahmen (20) mit wenigstens einer ersten Eingangsöffnung (21) ausgestattet ist, durch die das zu filternde Material in Form von Schlicker eingespritzt wird.

4. Eine Filterpresse (1) nach Patentanspruch 2, bei der der Rahmen (20) mit wenigstens einer zweiten Eingangsöffnung ausgestattet ist, durch die Farbmittel eingespritzt wird.

5. Eine Filterpresse (1) nach Patentanspruch 1, bei der die Membran (13) von einem Stützrahmen (14) in Position gehalten wird, der an dem Umfang der Filterplatte (4) befestigt ist.

6. Eine Filterpresse (1) nach Patentanspruch 5, bei welcher der Stützrahmen (14) mit Kanälen (18) ausgestattet ist, die mit wenigstens einem Entladungskanal (11) in Verbindung stehen.

7. Eine Filterpresse (1) nach Patentanspruch 1, bei der die Oberfläche der elastischen Membran (13), welche der entsprechenden Filterplatte (4) gegenüberliegt, Kanäle bildet.

8. Eine Filterpresse (1) nach Patentanspruch 1, bei der der Filtersitz (9) in ein Rahmensystem (4a) eingebunden ist, in dem ein Raster (10) untergebracht ist.

9. Eine Filterpresse (1) nach Patentanspruch 8, bei der ein Gitterelement (12) über dem Raster (10) angebracht ist.

10. Eine Filterpresse (1) nach Patentanspruch 1, bei welcher der Filtersitz (9) über einen Entladungskanal (11) mit einem vakuumversiegelten Tank in Verbindung steht.

11. Eine Filterpresse (1) nach Patentanspruch 1 und 10, bei der jede Filterplatte (4) mit einem Filtertuch (8) ausgekleidet ist, das sich drehen lässt, um die gefilterte Platte (100) auf die Fördermittel (110) zu übertragen, wobei das drehbare Tuch jeweils auf der elastischen Membran (13) auf einer Fläche der Filterplatte (4) und auf dem Gitter (12) auf der anderen Fläche der Filterplatte aufliegt.

12. Eine Filterpresse (1) nach Patentanspruch 1, einschließlich wenigstens eines beweglichen Kopfes (6) zum vertikalen Zusammenpressen der Filterplatten (4).

13. Eine Filterpresse (1) nach Patentanspruch 1, einschließlich Waschmitteln (24) zur Wiederherstellung der Durchlässigkeitseigenschaften des Filtertuchs (8) nach der Beendigung jedes einzelnen Formungszyklus' von Keramikplatten.

14. Eine Filterpresse (1) nach Patentanspruch 1, bei der die Filtertücher (8) von einer Antriebsrolle (22) an einem Ende jeder Filterplatte (4) und einer Leerlaufrolle (23) am anderen Ende betrieben werden.

15. Eine Filterpresse (1) nach Patentanspruch 1, einschließlich einer Vielzahl an Filterplatten (4).

16. Eine Filterpresse (1) nach Patentanspruch 1, bei der das zu filternde Material Keramikschlicker ist.

17. Ein Verfahren zur Keramikplattenformung einschließlich folgender Schritte:
a) Bereitstellung einer Filterpresse nach einem der Ansprüche von 1 bis 16;
b) Einspritzen des zu filternden Materials in die Filterkammer unter Druck durch wenigstens eine erste Eingangsöffnung (21);
c) Druckbildung in der Filterkammer durch Verformung der undurchlässigen elastischen Membran (13).
d) Abziehen des Drucks;
e) Auseinanderziehen der zwei Filterplatten (4) und Drehen des Tuches (8) zur Entfernung des Filtrats in Form einer Keramikplatte.

18. Ein Verfahren nach Patentanspruch 17, einschließlich des Einspritzens einer Mischung aus Farbmittel unter Druck in die Filterkammer.

19. Ein Verfahren nach Patentanspruch 17, bei dem das Einspritzen des zu filternden Materials bei einem Druck von 25 bar ausgeführt wird.

20. Ein Verfahren nach Patentanspruch 17, bei dem der aus der Umformung der Membran entstehende Druck zwischen 15 und 25 bar liegt.

21. Ein Verfahren nach Patentanspruch 17, bei dem das zu filternde Material eine Suspension aus Keramikschlicker und seinen Derivaten ist.

## Revendications

1. Un filtre-presse (1) comprenant au moins deux plaques horizontales (4) mobiles sur le plan vertical entre une première configuration fixe, dans laquelle elles sont fixées ensemble pour définir au moins une chambre de filtration afin de recevoir le matériau à filtrer, et une deuxième configuration ouverte, dans laquelle elles sont écartées pour permettre audit matériau d'être déchargé sous la forme d'un panneau filtré (100), au moins l'une desdites deux plaques (4) étant dotée d'au moins un canal de décharge pour le filtrat, où dans une face de la plaque (4) est prévu un siège de filtration (9) limité par un cadre périmétral (4a), pour former un compartiment agissant comme chambre de filtrat, chaque plaque (4) comprenant un tissu filtrant (8) pivotant afin de transférer ledit panneau filtré (100) vers un dispositif de transport ultérieur (110),
**caractérisé par le fait que**
l'autre face de la plaque (4) est recouverte d'une membrane élastique imperméable (13), la région entre la membrane (13) et la face de la plaque (4) étant en communication avec un fluide sous pression tel que l'air, l'eau ou l'huile, et **par le fait que** chaque plaque (4) est enveloppée par ledit tissu filtrant (8).

2. Un filtre-presse (1) selon la revendication 1, où un cadre (20) ayant la même épaisseur et la même surface interne vide que celles requises pour le panneau filtré (100) est intercalé entre lesdites deux plaques (4) au minimum.

3. Un filtre-presse (1) selon la revendication 2, où ledit cadre (20) est doté d'au moins un premier trou d'entrée (21) pour l'injection dudit matériau à filtrer sous forme de barbotine.

4. Un filtre-presse (1) selon la revendication 2, où ledit cadre (20) est doté d'au moins un deuxième trou d'entrée pour l'injection de matériau colorant.

5. Un filtre-presse (1) selon la revendication 1, où ladite membrane (13) est maintenue en position par une cadre de support (14) fixé sur le périmètre de la plaque (4).

6. Un filtre-presse (1) selon la revendication 5, où ledit cadre de support (14) est doté de canaux (18) communiquant avec ledit canal de décharge (11) au minimum.

7. Un filtre-presse (1) selon la revendication 1, où la surface de ladite membrane élastique (13) opposée à celle de la plaque (4) avec laquelle elle est associée est profilée de manière à former des canaux.

8. Un filtre-presse (1) selon la revendication 1, où le siège de filtration (9) est limité par un cadre périmétral (4a) dans lequel est logée une grille (10).

9. Un filtre-presse (1) selon la revendication 8, où un élément en treillis (12) est positionné par dessus ladite grille (10).

10. Un filtre-presse (1) selon la revendication 1, où li siège de filtration (9) communique à travers un canal de décharge (11) avec un réservoir scellé maintenu sous vide.

11. Un filtre-presse (1) selon les revendications 1 et 10, où chaque plaque (4) est enveloppée par un tissu filtrant (8) pivotant afin de transférer ledit panneau filtré (100) vers un dispositif de transport ultérieur (110), ledit tissu pivotant reposant respectivement sur la membrane élastique (13) sur une plaque de la plaque (4) et sur le treillis (12) sur l'autre face de la plaque.

12. Un filtre-presse (1) selon la revendication 1, comprenant au moins une tête mobile (6) pour comprimer verticalement lesdites plaques (4).

13. Un filtre-presse (1) selon la revendication 1, comprenant un dispositif de lavage (24) pour rétablir les caractéristiques de perméabilité du tissu filtrant (8) à la fin de chaque cycle de formation de dalle.

14. Un filtre-presse (1) selon la revendication 1, où lesdits tissus filtrants (8) sont actionnés par un rouleau d'entraînement (22) positionné à une extrémité de chaque plaque (4) et un rouleau libre (23) positionné à l'extrémité opposée.

15. Un filtre-presse (1) selon la revendication 1, comprenant plusieurs desdites plaques (4).

16. Un filtre-presse (1) selon la revendication 1, où ledit matériau à filtrer est une barbotine céramique.

17. Une méthode de formation de dalle comprenant les étapes suivantes :
a) filtre-presse selon l'une des revendications 1 à 16 ;
b) injection sous pression du matériau à filtrer dans ladite chambre de filtration par l'intermédiaire d'un premier trou d'entrée (21) au minimum ;
c) création d'une pression à l'intérieur de ladite chambre de filtration par déformation de la membrane élastique imperméable (13) qu'elle contient ;
d) retrait de ladite pression ;
e) écartement desdites deux plaques (4) et rotation dudit tissu (8) pour retirer le matériau filtré sous la forme d'une dalle.

18. Une méthode selon la revendication 17 comprenant également une étape d'injection d'un matériau colorant sous pression dans ladite chambre de filtration.

19. Une méthode selon la revendication 17, où l'injection du matériau à filtrer est effectuée à une pression de 25 bar.

20. Une méthode selon la revendication 17, où ladite pression créée par la déformation de la membrane est comprise entre 15 et 25 bar.

21. Une méthode selon la revendication 17, où ledit matériau à filtrer est une suspension de barbotine céramique et ses dérivés.
